# EUROPÄISCHE PATENTSCHRIFT

(11) **EP 3 032 517 B1**
(45) Veröffentlichungstag und Bekanntmachung des Hinweises auf die Patenterteilung: **29.05.2019**
(21) Anmeldenummer: 15002863.7
(22) Anmeldetag: 07.10.2015
(51) Int. Cl.: B60R 1/00, G06K 9/00, H04N 7/18, G08G 1/16

(54) **VORRICHTUNG UND VERFAHREN ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE À UN CONDUCTEUR D'UN VÉHICULE AUTOMOBILE, EN PARTICULIER UN VÉHICULE UTILITAIRE

(30) Priorität: 10.12.2014 DE 102014018364
(43) Veröffentlichungstag der Anmeldung: 15.06.2016
(73) Patentinhaber: MAN Truck & Bus AG, 80995 München (DE)
(72) Erfinder: Heyes, Daniel, 81247 München (DE); Dörner, Karlheinz, 85757 Karlsfeld (DE); Zimmermann, Andreas, 80995 München (DE); Schwertberger, Walter, 82278 Althegnenberg (DE)
(74) Vertreter: Liebl, Thomas

(56) Entgegenhaltungen:
- DE-A1-102011 106 173
- DE-A1-102013 002 642
- DE-A1-102013 217 430
- JP-A- 2014 015 191
- KR-A- 20120 077 309
- US-B1- 8 581 982

## Beschreibung

Die Erfindung betrifft eine Vorrichtung zur Unterstützung eines Fahrers eines Fahrzeugs, insbesondere eines Nutzfahrzeugs, nach dem Oberbegriff des Patentanspruches 1, ein Verfahren zur Unterstützung eines Fahrers eines Fahrzeugs, insbesondere eines Nutzfahrzeugs, nach dem Oberbegriff des Patentanspruches 10, sowie ein Fahrzeug, insbesondere ein Nutzfahrzeug, mit der Vorrichtung und/oder zur Durchführung des Verfahrens nach Patentanspruch 14.

Bei modernen Fahrzeugen, insbesondere Nutzfahrzeugen, ist es bekannt, Seitenspiegel bzw. seitliche Außenspiegel des Nutzfahrzeugs durch Kamera-Monitor-Systeme zu ersetzen. Derartige Kamera-Monitor-Systeme weisen üblicherweise eine, in Fahrzeug-Querrichtung gesehen, seitlich außen an einer ersten Außenseite des Fahrzeugs angeordnete erste Kamera und eine gegenüberliegend zu der ersten Außenseite an einer zweiten Außenseite des Fahrzeugs angeordnete zweite Kamera auf. Mittels jeder dieser Kameras kann dabei ein, in Fahrzeug-Querrichtung gesehen, seitlich neben dem Fahrzeug und, in Fahrzeug-Längsrichtung gesehen, hinter einem Fahrer des Fahrzeugs liegender Fahrstreckenbereich bildlich bzw. filmisch erfasst werden. Die Kameras sind üblicherweise signaltechnisch mit einem im Blickfeld des Fahrers angeordneten Bildschirm verbunden, so dass dem Fahrer mittels des Bildschirms zumindest ein Teil der mittels der Kameras erfassten Fahrstreckenbereiche angezeigt werden kann.

Die Interpretation der an dem Bildschirm angezeigten Fahrstreckenbereiche erfolgt üblicherweise durch den Fahrer selbst, so dass der Fahrer die Positionen von in den Fahrstreckenbereichen befindlichen Objekten selbst einschätzt. Weiter ist es auch bekannt, die mittels der Kameras erfassten Fahrstreckenbereiche maschinell bzw. mittels einer Datenverarbeitungseinrichtung zu interpretieren und die durch diese Interpretation ermittelten Informationen in Fahrerassistenzsystemen, beispielsweise in einem Spurwechsel- Assistenzsystem oder in einem Notbrems-Assistenzsystem, des Fahrzeugs zu verwenden. In beiden Fällen ist es jedoch schwierig, die Positionen der in den erfassten Fahrstreckenbereichen befindlichen Objekte relativ zu dem Fahrzeug richtig bzw. mit ausreichend hoher Genauigkeit einzuschätzen bzw. zu ermitteln.

Aus der DE 10 2013 217 430 A1 ist ein Fahrerassistenzsystem für ein Fahrzeug mit mehreren Sensoren bekannt, die an einem Fahrzeug angeordnet sind und Objekte detektieren sollen, die sich vor dem Fahrzeug bzw. seitlich des Fahrzeugs befinden.

Aus der JP 2014015191 A ist eine Kameraanordnung an einem rückwärtigen Heckbereich eines Kraftfahrzeugs bekannt, mit dem der rückwärtige Verkehr erfasst werden soll.

Aus der US 8,581,982 B1 ist der Einsatz eines Kamerasystems in Verbindung mit einer Scheinwerferanordnung bekannt. Der Einsatz einer Infrarotkamera in Verbindung mit einem einzigen Außenspiegel ist lediglich pauschal erwähnt.

Die KR 20120077309 A offenbart einen Fahrzeugaufbau mit mehreren Kameras, um den rückwärtigen Fahrzeugbereich bildlich zu erfassen.

Aufgabe der Erfindung ist es, eine Vorrichtung und ein Verfahren zur Unterstützung eines Fahrzeugs, insbesondere eines Nutzfahrzeugs, bereitzustellen, mittels denen die Positionen der in den mittels der Bild-Erfassungseinrichtungen erfassten Fahrstreckenbereichen befindlichen Objekte relativ zu den Fahrzeug auf einfache Weise mit hoher Genauigkeit ermittelt werden können.

Diese Aufgabe wird durch die Merkmale der unabhängigen Ansprüche gelöst. Bevorzugte Weiterbildungen sind in den Unteransprüchen offenbart.

Gemäß Patentanspruch 1 wird eine Vorrichtung zur Unterstützung eines Fahrers eines Fahrzeugs, insbesondere eines Nutzfahrzeugs, vorgeschlagen, mit einer, in Fahrzeug-Querrichtung gesehen, seitlich außen an einer ersten Außenseite des Fahrzeugs angeordneten ersten Bild-Erfassungseinrichtung, insbesondere einer Kamera, und einer gegenüberliegend zu der ersten Außenseite an einer zweiten Außenseite des Fahrzeugs angeordneten zweiten Bild-Erfassungseinrichtung, insbesondere einer Kamera, wobei mittels jeder Bild-Erfassungseinrichtung jeweils ein, in Fahrzeug-Querrichtung gesehen, seitlich neben dem Fahrzeug und, in Fahrzeug-Längsrichtung gesehen, hinter einem Fahrer des Fahrzeugs liegender Fahrstreckenbereich bildlich und/oder filmisch erfasst werden kann, und mit einer Anzeigeeinrichtung, insbesondere einem Bildschirm, mittels der dem Fahrer zumindest ein Teil der erfassten Fahrstreckenbereiche angezeigt werden kann, wobei die Bild-Erfassungseinrichtungen und die Anzeigeeinrichtung einen Ersatz für seitliche Fahrzeug-Außenspiegel ausbilden. Erfindungsgemäß ist eine datenübertragend mit den Bild-Erfassungseinrichtungen verbundene Objektermittlungseinrichtung vorgesehen, mittels der aus den Aufnahmen der Bild-Erfassungseinrichtungen die Positionen von in den mittels der der Bild-Erfassungseinrichtungen erfassten Fahrstreckenbereichen befindlichen Objekten, insbesondere Fahrzeugen, relativ zu dem Fahrzeug ermittelbar sind, wobei die Bild-Erfassungseinrichtungen und die Objektermittlungseinrichtung ein Stereokamerasystem ausbilden.

Auf diese Weise werden die Positionen der in den mittels der Bild-Erfassungseinrichtungen erfassten Fahrstreckenbereichen befindlichen Objekte auf einfache Weise mit hoher Genauigkeit ermittelt, da die ohnehin bereits am Fahrzeug vorgesehenen Bild-Erfassungseinrichtungen des Kamera-Monitor-Systems zur Realisierung eines Stereokamerasystems verwendet werden. Es müssen daher keine zusätzlichen Bild-Erfassungseinrichtungen vorgesehen werden, um ein Stereokamerasystem auszubilden. Dadurch kann das erfindungsgemäße Stereokamerasystem auch besonders kostengünstig realisiert werden. Mittels des Stereokamerasystems können die Positionen der Objekte mit besonders hoher Genauigkeit ermittelt werden, da zur Ermittlung der Position eines Objekts das Objekt aus unterschiedlichen Perspektiven mittels der Bild-Erfassungseinrichtungen aufgenommen wird. Aus diesen Aufnahmen kann die Position des Objekts dann mittels des Verfahrens der Stereovision mit hoher Genauigkeit ermittelt werden. Üblicherweise werden dabei Korrespondenzmerkmale des Objekts in den Aufnahmen extrahiert und mittels der Informationen zu den Positionen der Bild-Erfassungseinrichtungen am Fahrzeug die Position des Objekts relativ zum Fahrzeug, insbesondere die Entfernung des Objekts zum Fahrzeug, ermittelt.

In einer bevorzugten Ausführung der erfindungsgemäßen Vorrichtung ist eine, insbesondere optische und/oder akustische Anzeigeeinrichtung vorgesehen, mittels der einem Fahrer des Fahrzeugs Informationen zu den mittels der Objektermittlungseinrichtung ermittelten Positionen angezeigt werden können. Auf diese Weise kann der Fahrer des Fahrzeugs über die Positionen der in den erfassten Fahrstreckenbereichen befindlichen Objekte relativ zu dem Fahrzeug informiert werden. Derartige Informationen können dem Fahrer beispielsweise mittels eines Bildschirms angezeigt werden. Ebenso ist es beispielsweise möglich, dem Fahrer die Informationen mittels akustischer Warnsignale anzuzeigen. Sofern die Informationen mittels eines Bildschirms angezeigt werden, ist bevorzugt lediglich ein einziger Bildschirm vorgesehen, mittels dem dem Fahrer des Fahrzeugs sowohl die mittels der Bild-Erfassungseinrichtungen erfassten Fahrstreckenbereiche als auch die Informationen zu den mittels der Objektermittlungseinrichtung ermittelten Positionen angezeigt werden.

Alternativ und/oder zusätzlich kann die Objektermittlungseinrichtung auch datenübertragend mit wenigstens einem Informationen zu den Positionen der Objekte relativ zu dem Fahrzeug verwendendem Fahrerassistenzsystem, insbesondere mit einem Spurwechsel-Assistenzsystem und/oder mit einem Notbrems-Assistenzsystem, des Fahrzeugs verbunden sein. Dadurch wird die Zuverlässigkeit des Fahrerassistenzsystems deutlich erhöht, da mittels des erfindungsgemäßen Stereokamerasystems die Positionen der Objekte mit besonders hoher Genauigkeit ermittelt werden können. Die Informationen zu den Positionen der Objekte können dabei beispielsweise in einem Umfeldmodell des Fahrerassistenzsystems verwendet werden, das die Positionen der im gesamten Fahrzeugumfeld befindlichen Objekten relativ zu dem Fahrzeug ermittelt.

Bevorzugt kann mittels der Bild-Erfassungseinrichtungen wenigstens ein Teilbereich der mittels der erfassbaren Fahrstreckenbereiche gleichzeitig mittels Bild-Erfassungseinrichtungen erfasst werden, so dass dieser Teilbereich einen Überlappungsbereich der erfassten Fahrstreckenbereiche ausbildet. Mittels der Objektermittlungseinrichtung können dann die Positionen von in dem Überlappungsbereich befindlichen Objekten relativ zu dem Fahrzeug ermittelt werden. Auf diese Weise können die Positionen der Objekte besonders einfach mittels des Verfahrens der Stereovision ermittelt werden, da die Objekte gleichzeitig mittels der ersten und der zweiten Bild-Erfassungseinrichtung erfasst werden.

Erfindungsgemäß kann mittels der Bild-Erfassungseinrichtungen wenigstens ein Teilbereich der erfassbaren Fahrstreckenbereiche nicht gleichzeitig mittels der Bild-Erfassungseinrichtungen erfasst werden, so dass dieser Teilbereich keinen Überlappungsbereich der erfassten Fahrstreckenbereiche ausbildet. Weiter erfindungsgemäß ist eine Positionsermittlungseinrichtung vorgesehen, mittels der zu einem ersten Zeitpunkt eine erste Position des Fahrzeugs auf der Fahrstrecke ermittelbar ist, und mittels der zu einem zweiten Zeitpunkt eine gegenüber der ersten Position unterschiedliche, zweite Position des Fahrzeugs auf der Fahrstrecke ermittelbar ist, wobei in der ersten Position ein nicht gleichzeitig erfassbarer Teilbereich der Fahrstreckenbereiche mittels der ersten Bild-Erfassungseinrichtung erfassbar ist, während in der zweiten Position dieser Teilbereich mittels der zweiten Bild-Erfassungseinrichtung erfassbar ist. Weiter erfindungsgemäß kann mittels der Objektermittlungseinrichtung dann aus den mittels der Positionsermittlungseinrichtung ermittelten unterschiedlichen Positionen und aus dem in den unterschiedlichen Position mittels der Bild-Erfassungseinrichtungen erfassten Teilbereich die Positionen von in dem nicht gleichzeitig erfassbaren Teilbereich befindlichen Objekten relativ zu dem Fahrzeug ermittelt werden. So können die Positionen von Objekten auch dann mittels des Verfahrens der Stereovision ermittelt werden, wenn die Objekte nicht gleichzeitig mittels der ersten und der zweiten Bild-Erfassungseinrichtung erfasst werden können. Bevorzugt werden dabei bei der Ermittlung der Position eines Objekts mittels des Verfahrens der Stereovision Korrespondenzmerkmale des Objekts in den Aufnahmen der ersten und zweiten Bild-Erfassungseinrichtung extrahiert und die Bewegungen der Korrespondenzmerkmale für einen definierten Zeitraum beobachtet. Es kann dann eine Vorhersage und/oder eine Extrapolation der Bewegung der Korrespondenzmerkmale von dem ersten zu dem zweiten Zeitpunkt vorgenommen werden, wodurch die Position des Objekts zuverlässig und mit hoher Genauigkeit ermittelt werden kann. Sofern die Vorhersage und/oder die Extrapolation ein unplausibles Ergebnis liefert, wird die Position des Objekts nicht mittels der Objektermittlungseinrichtung ermittelt.

Vorzugsweise weist die Objektermittlungseinrichtung eine Speichereinrichtung auf, mittels der die Aufnahmen der ersten Bild-Erfassungseinrichtung zu dem ersten Zeitpunkt, die Aufnahmen der zweiten Bild-Erfassungseinrichtung zu dem zweiten Zeitpunkt und die mittels der Positionsermittlungseinrichtung zu dem ersten und zweiten Zeitpunkt ermittelten Positionen zumindest für einen definierten Zeitraum gespeichert werden können. Mittels der Speichereinrichtung können die für die Ermittlung der Positionen der Objekte erforderlichen Informationen für die Objektermittlungseinrichtung bereitgehalten werden, wodurch die Ermittlung der Positionen deutlich vereinfacht wird.

Bevorzugt weist die Positionsermittlungseinrichtung eine Fahrspurerkennungseinrichtung auf, mittels der die Fahrspur des Fahrzeugs und die Position des Fahrzeugs innerhalb der Fahrspur erkannt und/oder erfasst werden können. So kann die Position des Fahrzeugs relativ zur Fahrstrecke einfach und zuverlässig ermitteln zu können. Bevorzugt wird dabei der erste oder der zweite Zeitpunkt in Abhängigkeit von der ermittelten Fahrspur und der ermittelten Position des Fahrzeugs innerhalb der Fahrspur mittels der Objektermittlungseinrichtung ermittelt. Mittels der Information über die Fahrspur und die Position des Fahrzeugs innerhalb der Fahrspur kann die Objektermittlungseinrichtung die aktuelle Ausrichtung der Bild-Erfassungseinrichtungen und somit auch die aktuell mittels der Bild-Erfassungseinrichtungen erfassten Fahrstreckenbereiche ermitteln. Die Objektermittlungseinrichtung kann dann gezielt diejenigen Aufnahmen der Bild-Erfassungseinrichtungen bzw. diejenigen Zeitpunkte zur Ermittlung der Objektpositionen verwenden, mittels denen die Ermittlung der Objektpositionen mit hoher Genauigkeit möglich ist.

Weiter bevorzugt ist eine Streckenverlauf-Erkennungseinrichtung vorgesehen, mittels der der Streckenverlauf der Fahrstrecke, insbesondere der Fahrspur, des Fahrzeugs erkannt und/oder erfasst werden kann. Die Streckenverlauf-Erkennungseinrichtung ist dabei datenübertragend mit der Objektermittlungseinrichtung verbunden. Dadurch wird die Genauigkeit der Ermittlung der Objektpositionen erhöht, da hierzu nun auch der Streckenverlauf der Fahrstrecke berücksichtigt werden kann. Bevorzugt wird der erste und/oder der zweite Zeitpunkt in Abhängigkeit von dem ermittelten Streckenverlauf der Fahrstrecke mittels der Objektermittlungseinrichtung ermittelt. Mittels der Information über den Streckenverlauf der Fahrstrecke kann die Objektermittlungseinrichtung gezielt diejenigen Aufnahmen der Bild-Erfassungseinrichtungen bzw. diejenigen Zeitpunkte zur Ermittlung der Objektpositionen verwenden, die eine Ermittlung der Objektpositionen mit hoher Genauigkeit ermöglichen.

In einer weiteren bevorzugten Ausführung der erfindungsgemäßen Vorrichtung ist zusätzlich zu der ersten Bild-Erfassungseinrichtung wenigstens eine weitere Bild-Erfassungseinrichtung an der ersten Außenseite des Fahrzeugs angeordnet, mittels der ein, in Fahrzeug-Querrichtung gesehen, seitlich neben dem Fahrzeug und, in Fahrzeug-Längsrichtung gesehen, hinter dem Fahrer des Fahrzeugs liegender Fahrstreckenbereich bildlich bzw. filmisch erfasst werden kann. Die an der ersten Außenseite angeordneten Bild-Erfassungseinrichtungen sind dabei datenübertragend mit der Objektermittlungseinrichtung verbunden. Mittels der Objektermittlungseinrichtung können dann aus den Aufnahmen der an der ersten Außenseite angeordneten Bild-Erfassungseinrichtungen die Position von in den mittels der an der ersten Außenseite angeordneten Bild-Erfassungseinrichtungen erfassten Fahrstreckenbereichen befindlichen Objekten, insbesondere Fahrzeugen, relativ zu dem Fahrzeug ermittelt werden, wobei die an der ersten Außenseite des Fahrzeugs angeordneten Bild-Erfassungseinrichtungen und die Objektermittlungseinrichtung ein Stereokamerasystem ausbilden. So kann ebenfalls auf besonders einfache bzw. kostengünstige Weise ein Stereokamerasystem ausgebildet werden. Mittels eines derartigen Stereokamerasystems können auch Positionen von Objekten relativ zu dem Fahrzeug ermittelt werden, die nicht mittels der ersten und zweiten Bild-Erfassungseinrichtung erfasst werden können. Sofern ein Objekt mittels der ersten und zweiten Bild-Erfassungseinrichtung und der wenigstens einen weiteren Bild-Erfassungseinrichtung erfasst werden kann, kann die Position dieses Objekts zudem mit besonders hoher Genauigkeit ermittelt werden. Die Informationen zu den mittels der Objektermittlungseinrichtung ermittelten Positionen können dann ebenfalls dem Fahrer mittels einer Anzeigeeinrichtung, insbesondere eines Bildschirms, angezeigt werden und/oder an ein Fahrerassistenzsystem übermittelt werden.

Ebenso kann auch zusätzlich zu der zweiten Bild-Erfassungseinrichtung wenigstens eine weitere Bild-Erfassungseinrichtung an der zweiten Außenseite des Fahrzeugs angeordnet sein, mittels der ein, in Fahrzeug-Querrichtung gesehen, seitlich neben dem Fahrzeug und, in Fahrzeug-Längsrichtung gesehen, hinter dem Fahrer des Fahrzeugs liegender Fahrstreckenbereich bildlich bzw. filmisch erfasst werden kann. Die an der zweiten Außenseite angeordneten Bild-Erfassungseinrichtungen sind dann ebenfalls datenübertragend mit der Objektermittlungseinrichtung verbunden. Mittels der Objektermittlungseinrichtung können dann aus den Aufnahmen der an der zweiten Außenseite angeordneten Bild-Erfassungseinrichtungen die Positionen von in den mittels der an der zweiten Außenseite angeordneten Bild-Erfassungseinrichtungen erfassten Fahrstreckenbereichen befindlichen Objekten, insbesondere Fahrzeugen, relativ zu dem Fahrzeug ermittelt werden, wobei die an der zweiten Außenseite des Fahrzeugs angeordneten Bild-Erfassungseinrichtungen und die Objektermittlungseinrichtung ein Stereokamerasystem ausbilden. Be Die Informationen zu den mittels der Objektermittlungseinrichtung ermittelten Positionen können dann ebenfalls dem Fahrer mittels einer Anzeigeeinrichtung, insbesondere eines Bildschirms, angezeigt werden und/oder an ein Fahrerassistenzsystem übermittelt werden.

Zur Lösung der bereits genannten Aufgabe wird ferner ein Verfahren zur Unterstützung eines Fahrers eines Fahrzeugs, insbesondere eines Nutzfahrzeugs, vorgeschlagen, mit einer, in Fahrzeug-Querrichtung gesehen, seitlich außen an einer ersten Außenseite des Fahrzeugs angeordneten ersten Bild-Erfassungseinrichtung, insbesondere einer Kamera, und einer gegenüberliegend zu der ersten Außenseite einer zweiten Außenseite des Fahrzeugs angeordneten zweiten Bild-Erfassungseinrichtung, insbesondere einer Kamera, wobei mittels jeder Bild-Erfassungseinrichtung jeweils ein, in Fahrzeug-Querrichtung gesehen, seitlich neben dem Fahrzeug und, in Fahrzeug-Längsrichtung gesehen, hinter einem Fahrer des Fahrzeugs liegender Fahrstreckenbereich bildlich und/oder filmisch erfasst wird, und mit einer Anzeigeeinrichtung, insbesondere einem Bildschirm, mittels der einem Fahrer des Fahrzeugs zumindest ein Teil der erfassten Fahrstreckenbereiche angezeigt wird. Erfindungsgemäß ist eine Datenübertragung mit den Bild-Erfassungseinrichtungen verbundene Objektermittlungseinrichtung vorgesehen, mittels der aus den Aufnahmen der Bild-Erfassungseinrichtungen die Positionen von in den mittels der Bild-Erfassungseinrichtungen erfassten Fahrstreckenbereichen befindlichen Objekten, insbesondere Fahrzeugen, relativ zu dem Fahrzeug ermittelt werden, wobei die Bild-Erfassungseinrichtungen und die Objektermittlungseinrichtung ein Stereokamerasystem ausbilden.

Die sich durch die erfindungsgemäße Verfahrensführung und durch die darauf rückbezogenen Unteransprüche ergebenden Vorteile sind identisch mit den bereits gewürdigten Vorteilen der erfindungsgemäßen Vorrichtung, so dass diese hier nicht wiederholt werden.

Bevorzugt befindet sich das Fahrzeug während des ersten und/oder des zweiten Zeitpunkts in Geradeausfahrt. Bei Geradeausfahrt können die Positionen der Objekte besonders einfach und mit einer hohen Genauigkeit ermittelt werden, da beispielsweise etwaige Winkelfehler aufgrund der Ausrichtung des Fahrzeugs relativ zur Fahrspur nicht ausgeglichen werden müssen.

Des Weiteren wird auch ein Fahrzeug, insbesondere ein Nutzfahrzeug, mit der erfindungsgemäßen Vorrichtung und/oder zur Durchführung des erfindungsgemäßen Verfahrens beansprucht. Die sich hieraus ergebenden Vorteile sind identisch mit den bereits gewürdigten Vorteilen der erfindungsgemäßen Vorrichtung und des erfindungsgemäßen Verfahrens, so dass auch diese hier nicht wiederholt werden.

In einer bevorzugten Ausführung ist das Fahrzeug als Zugfahrzeug eines Fahrzeug-Gespanns ausgebildet, das mit einem Anhänger/Auflieger des Fahrzeug-Gespanns gekoppelt ist. Bei einem derart ausgebildeten Fahrzeug sind das erfindungsgemäße Verfahren und die erfindungsgemäße Vorrichtung besonders vorteilhaft, da die Sicht nach hinten hier häufig schwierig ist.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- oder Weiterbildungen sowie deren Vorteile werden nachfolgend anhand von Zeichnung lediglich beispielhaft näher erläutert.

Es zeigen:
- Fig. 1: in einer schematischen Darstellung von oben ein Fahrzeug-Gespann mit der erfindungsgemäßen Vorrichtung in einer ersten Fahrsituation;
- Fig. 2: in einer Darstellung gemäß Fig. 1 das Fahrzeug-Gespann in einer zweiten Fahrsituation; und
- Fig. 3: in einer schematischen Darstellung den Aufbau der erfindungsgemäßen Vorrichtung.

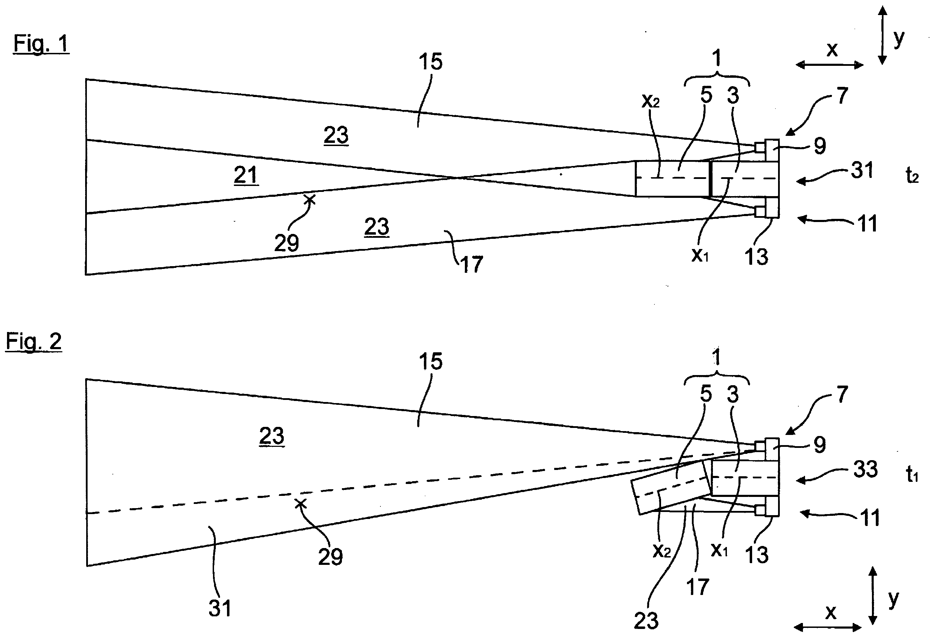

In Fig. 1 ist ein Fahrzeug-Gespann 1 in einer definierten Fahrsituation gezeigt. Das Fahrzeug-Gespann 1 weist ein Zugfahrzeug 3 und einen mit dem Zugfahrzeug 3 gekoppelten Anhänger/Auflieger 5 auf. In der in Fig. 1 gezeigten Fahrsituation des Fahrzeug-Gespanns 1 sind eine Längsmittelachse x₁ des Zugfahrzeugs 3 und eine Längsmittelachse x₂ des Anhängers/Aufliegers 5 zueinander fluchtend ausgerichtet. Eine derartige Fahrsituation kann sich beispielsweise bei einer Geradeausfahrt des Zugfahrzeugs 3 ergeben.

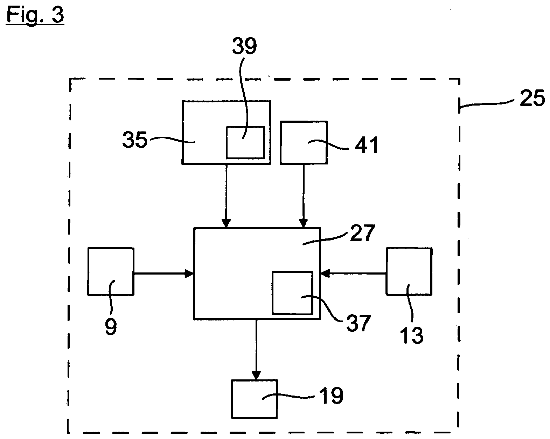

Wie in Fig. 1 weiter gezeigt ist, weist das Zugfahrzeug 3 des Fahrzeug-Gespanns 1 eine, in Fahrzeug-Querrichtung y gesehen, seitlich außen an einer ersten Außenseite 7 des Zugfahrzeugs 3 angeordnete erste Bild-Erfassungseinrichtung, hier beispielhaft eine Kamera 9, und eine gegenüberliegend zu der ersten Außenseite 7 an einer zweiten Außenseite 11 des Zugfahrzeugs 3 angeordnete zweite Bild-Erfassungseinrichtung, hier beispielhaft eine Kamera 13, auf. Mittels der Kamera 9 wird dabei ein, in Fahrzeug-Querrichtung y gesehen, seitlich neben dem Zugfahrzeug 3 und, in Fahrzeug-Längsrichtung x gesehen, hinter einem Fahrer des Zugfahrzeugs 3 liegender Fahrstreckenbereich 15 bildlich bzw. filmisch erfasst. Mittels der Kamera 13 wird ein, in Fahrzeug-Querrichtung y gesehen, seitlich neben dem Zugfahrzeug 3 und, in Fahrzeug-Längsrichtung x gesehen, hinter einem Fahrer des Zugfahrzeugs 3 liegender Fahrstreckenbereich 17 bildlich bzw. filmisch erfasst. Die Kameras 9, 13 sind datenübertragend mit einer Anzeigeeinrichtung des Zugfahrzeugs 3, hier beispielhaft ein Bildschirm 19 (Fig. 3) verbunden, mittels der dem Fahrer des Zugfahrzeugs 3 die mittels der Kameras 9, 13 erfassten Fahrstreckenbereiche 15, 17, hier beispielhaft vollständig, angezeigt werden. Somit bilden die Kameras 9, 13 und der Bildschirm 19 hier ein Kamera-Monitor-System aus, das anstelle von Seitenspiegeln an dem Zugfahrzeug 3 angebracht ist.

Wie aus Fig. 1 weiter hervorgeht, sind die Kameras 9, 13 hier beispielhaft derart ausgebildet, dass bei der in Fig. 1 gezeigten Fahrsituation ein Teil der mittels der Kameras 9, 13 erfassbaren Fahrstreckenabschnitte 15, 17 gleichzeitig mittels der Kameras 9, 13 erfasst werden kann, so dass dieser Teil einen Überlappungsbereich 21 der erfassten Fahrstreckenbereiche 15, 17 ausbildet. Zudem sind die Kameras 9, 13 hier auch derart ausgebildet, dass ein Teil 23 der mittels der Kameras 9, 13 erfassbaren Fahrstreckenbereiche 15, 17 bei der in Fig. 1 gezeigten Fahrsituation des Zugfahrzeugs 3 nicht gleichzeitig mittels der Kameras 9, 13 erfasst werden kann, so dass dieser Teil 23 keinen Überlappungsbereich der erfassten Fahrstreckenbereiche 15, 17 ausbildet.

Wie aus Fig. 3 hervorgeht, sind die Kameras 9, 13 und hier beispielhaft auch der Bildschirm 19 Bestandteil eines Stereokamerasystems 25 des Zugfahrzeugs 3. Das Stereokamerasystem 25 weist eine datenübertragend mit den Kameras 9, 13 und mit dem Bildschirm 19 verbundene Objektermittlungseinrichtung 27 auf, mittels der aus den Aufnahmen der Kameras 9, 13 die Positionen von in den mittels der Kameras 9, 13 erfassten Fahrstreckenbereichen 15, 17 befindlichen Objekten, beispielsweise Fahrzeugen, relativ zu dem Zugfahrzeug 3 ermittelt werden können. Mittels des Bildschirms 19 werden dem Fahrer des Zugfahrzeugs 3 dann Informationen zu den mittels der Objektermittlungseinrichtung 27 ermittelten Objektpositionen angezeigt.

Weiter umfasst das Stereokamerasystem 25 hier auch eine Positionsermittlungseinrichtung 35, mittels der eine Position des Zugfahrzeugs 3 relativ zur Fahrstrecke ermittelt werden kann. Die Positionsermittlungseinrichtung 35 ist datenübertragend mit der Objektermittlungseinrichtung 27 verbunden und weist hier beispielhaft eine Fahrspurerkennungseinrichtung 39 auf, mittels der die Fahrspur des Zugfahrzeugs 3 und die Position des Zugfahrzeugs 3 innerhalb einer Fahrspur erkannt bzw. erfasst werden kann. Zudem weist das Stereokamerasystem 25 hier auch eine Streckenverlauf-Erkennungseinrichtung 41 auf, mittels der der Streckenverlauf der Fahrspur des Zugfahrzeugs 3 erkannt bzw. erfasst werden kann. Die Streckenverlauf-Erkennungseinrichtung 41 ist ebenfalls datenübertragend mit der Objektermittlungseinrichtung 27 verbunden. Die Objektermittlungseinrichtung 27 weist weiter auch eine Speichereinrichtung 37 auf, mittels der die Aufnahmen der Kameras 9, 13, die mittels der Positionsermittlungseinrichtung 35 ermittelten Positionen und der mittels der Streckenverlauf-Erkennungseinrichtung 41 ermittelte Streckenverlauf der Fahrspur für einen definierten Zeitraum gespeichert werden.

Zur Ermittlung der Positionen von in den mittels der Kameras 9, 13 erfassten Fahrstreckenbereichen 15, 17 befindlichen Objekten mittels des Stereokamerasystems 25 wird hier zwischen den folgenden zwei Fällen unterschieden:
Sofern die Objekte gleichzeitig mittels der Kameras 9, 13 erfasst werden können und sich die Objekte somit einem in Fig. 1 gezeigten Überlappungsbereich 21 befinden, kann die Objektermittlungseinrichtung 27 die Positionen der Objekte unmittelbar ermitteln.

Sofern die Objekte nicht gleichzeitig mittels der Kameras 9, 13 erfasst werden können und sich die Objekte somit nicht in einem Überlappungsbereich 21 befinden, können die Positionen der Objekte nicht unmittelbar mittels der Objektermittlungseinrichtung 27 ermittelt werden. Dieser Fall wird nachfolgend anhand eines in Fig. 1 und 2 gezeigten Objekts 29 beispielhaft erläutert:
Zu einem in Fig. 1 gezeigten zweiten Zeitpunkt t₂ befindet sich das Zugfahrzeug 3 in der bereits erwähnten Fahrsituation, bei der die Längsmittelachse x₁ des Zugfahrzeugs 3 und die Längsmittelachse x₂ des Anhängers/Aufliegers 5 zueinander fluchtend ausgerichtet sind. Das Zugfahrzeug 3 weist dabei eine zweite Position 31 auf der Fahrstrecke auf. Zu einem in Fig. 2 gezeigten, gegenüber dem ersten Zeitpunkt t₂ früheren ersten Zeitpunkt t₁ befindet sich das Zugfahrzeug 3 in einer Fahrsituation, bei der die Längsmittelachse x₁ des Zugfahrzeugs 3 und die Längsmittelachse x₂ des Anhängers/Aufliegers 5 zueinander angewinkelt sind. Das Zugfahrzeug 3 weist hier eine gegenüber der zweiten Position 31 unterschiedliche erste Position 33 auf der Fahrstrecke auf. Derartige Fahrsituationen können sich beispielsweise beim Pendeln des Fahrzeug-Gespanns 1 innerhalb der Fahrspur des Fahrzeug-Gespanns 1 ergeben.

Zu den Zeitpunkten t₁ und t₂ werden unterschiedliche Fahrstreckenbereiche 15, 17 mittels der Kameras 9, 13 erfasst, da die Positionen des Anhängers/Aufliegers 5 relativ zu dem Zugfahrzeug 3 unterschiedlich sind. Zu dem ersten Zeitpunkt t₁ wird das Objekt 29 lediglich mittels der Kamera 9 erfasst. Der mittels der Kamera 9 erfassbare Fahrstreckenbereich 15 ist dabei gegenüber dem zweiten Zeitpunkt t₂ um einen zusätzlichen Bereich 31 vergrößert. Zu dem zweiten Zeitpunkt t₂ wird das Objekt 29 lediglich mit der Kamera 13 des Zugfahrzeugs 3 erfasst. Somit wird das Objekt 29 hier zeitlich versetzt mittels der Kameras 9, 13 erfasst.

Die Aufnahmen der Kamera 13 zu dem ersten Zeitpunkt t₁ und die Aufnahmen der Kamera 13 zu dem zweiten Zeitpunkt t₂ werden in der Speichereinrichtung 37 der Objektermittlungseinrichtung 27 gespeichert. Zudem werden auch die mittels der Positionsermittlungseinrichtung 35 ermittelten Positionen 31, 33 des Zugfahrzeugs 3 auf der Fahrstrecke zu den Zeitpunkten t₁ und t₂ und der mittels der Streckenverlauf-Erkennungseinrichtung 41 ermittelte Streckenverlauf der Fahrstrecke zu den Zeitpunkten t₁ und t₂ in der Speichereinrichtung 37 der Objektermittlungseinrichtung 27 gespeichert. Die beiden Zeitpunkte t₁ und t₂ bzw. welche Daten in der Speichereinrichtung 37 gespeichert werden sollen, ermittelt die Objektermittlungseinrichtung 27 hier beispielhaft über die fortdauernd mittels der Positionsermittlungseinrichtung 35 ermittelte Position des Zugfahrzeugs 3 auf der Fahrstrecke und den fortdauernd mittels der Streckenverlauf-Erkennungseinrichtung 41 ermittelten Streckenverlauf.

Mittels der in der Speichereinrichtung 37 gespeicherten Daten kann die Objektermittlungseinrichtung 27 dann die Position des Objekts 29 relativ zu dem Zugfahrzeug 3 mittels des Verfahrens der Stereovision ermitteln.

### Bezugszeichenliste

- 1: Fahrzeug-Gespann
- 3: Zugfahrzeug
- 5: Anhänger/Auflieger
- 7: erste Außenseite
- 9: erste Kamera
- 11: zweite Außenseite
- 13: zweite Kamera
- 15: Fahrstreckenbereich
- 17: Fahrstreckenbereich
- 19: Bildschirm
- 21: Überlappungsbereich
- 23: Teil
- 25: Stereokamerasystem
- 27: Objektermittlungseinrichtung
- 29: Objekt
- 30: zusätzlicher Bereich
- 31: zweite Position
- 33: erste Position
- 35: Positionsermittlungseinrichtung
- 37: Speichereinrichtung
- 39: Fahrspurerkennungseinrichtung
- 41: Streckenverlauf-Erkennungseinrichtung
- t₁: erster Zeitpunkt
- t₂: zweiter Zeitpunkt
- x₁: Längsmittelachse Zugfahrzeug
- x₂: Längsmittelachse Anhänger/Auflieger
- Δt: Zeitintervall

## Patentansprüche

1. Vorrichtung zur Unterstützung eines Fahrers eines Fahrzeugs, mit einer, in Fahrzeug-Querrichtung (y) gesehen, seitlich außen an einer ersten Außenseite (7) des Fahrzeugs (3) angeordneten ersten Bild-Erfassungseinrichtung (9) und einer gegenüberliegend zu der ersten Außenseite (7) an einer zweiten Außenseite (11) des Fahrzeugs (3) angeordneten zweiten Bild-Erfassungseinrichtung (13), wobei mittels jeder Bild-Erfassungseinrichtung (9, 13) jeweils ein, in Fahrzeug-Querrichtung (y) gesehen, seitlich neben dem Fahrzeug (3) und, in Fahrzeug-Längsrichtung (x) gesehen, hinter einem Fahrer des Fahrzeugs (3) liegender Fahrstreckenbereich (15, 17) bildlich und/oder filmisch erfassbar ist, und mit einer Anzeigeeinrichtung (19), mittels der dem Fahrer zumindest ein Teil der erfassten Fahrstreckenbereiche (15, 17) anzeigbar ist, wobei die Bild-Erfassungseinrichtungen (9, 13) und die Anzeigeeinrichtung (19) einen Ersatz für seitliche Fahrzeug-Außenspiegel ausbilden,
**dadurch gekennzeichnet,**
**dass** eine datenübertragend mit den Bild-Erfassungseinrichtungen (9, 13) verbundene Objektermittlungseinrichtung (27) vorgesehen ist, mittels der aus den Aufnahmen der Bild-Erfassungseinrichtungen (9, 13) die Positionen von in den mittels der Bild-Erfassungseinrichtungen (9, 13) erfassten Fahrstreckenbereichen (15, 17) befindlichen Objekten (29) relativ zu dem Fahrzeug (3) ermittelbar sind, wobei die Bild-Erfassungseinrichtungen (9, 13) und die Objektermittlungseinrichtung (27) ein Stereokamerasystem (25) ausbilden,
**dass** wenigstens ein Teilbereich (23) der erfassbaren Fahrstreckenbereiche (15, 17) nicht gleichzeitig mittels der Bild-Erfassungseinrichtungen (9, 13) erfassbar ist, so dass dieser Teilbereich (23) keinen Überlappungsbereich der erfassten Fahrstreckenbereiche (15, 17) ausbildet,
**dass** eine Positionsermittlungseinrichtung (35) vorgesehen ist, mittels der zu einem ersten Zeitpunkt (t₁) eine erste Position (33) des Fahrzeugs (3) auf der Fahrstrecke ermittelbar ist, und mittels der zu einem zweiten Zeitpunkt (t₂) eine gegenüber der ersten Position (33) unterschiedliche, zweite Position (31) des Fahrzeugs (3) auf der Fahrstrecke ermittelbar ist, wobei in der ersten Position (33) ein nicht gleichzeitig erfassbarer Teilbereich (23) der Fahrstreckenbereiche (15, 17) mittels der ersten Bild-Erfassungseinrichtung (9) erfassbar ist, während in der zweiten Position (31) dieser Teilbereich (23) mittels der zweiten Bild-Erfassungseinrichtung (13) erfassbar ist,
und **dass** mittels der Objektermittlungseinrichtung (27) aus den mittels der Positionsermittlungseinrichtung (35) ermittelten unterschiedlichen Positionen (31, 33) und aus dem in den unterschiedlichen Position (31, 33) mittels der Bild-Erfassungseinrichtungen (9, 13) erfassten Teilbereich (23) die Positionen von in dem nicht gleichzeitig erfassbaren Teilbereich (23) befindlichen Objekten (29) relativ zu dem Fahrzeug (1) ermittelbar sind.

2. Vorrichtung nach Anspruch 1, **dadurch gekennzeichnet, dass** eine Anzeigeeinrichtung (19) vorgesehen ist, mittels der einem Fahrer des Fahrzeugs (3) Informationen zu den mittels der Objektermittlungseinrichtung (29) ermittelten Positionen anzeigbar sind, und/oder dass die Objektermittlungseinrichtung (27) datenübertragend mit wenigstens einem Informationen zu den Positionen der Objekte relativ zu dem Fahrzeug verwendendem Fahrerassistenzsystem des Fahrzeugs verbunden ist.

3. Vorrichtung nach Anspruch 1 oder 2, **dadurch gekennzeichnet, dass** wenigstens ein Teilbereich der erfassbaren Fahrstreckenbereiche (15, 17) gleichzeitig mittels der Bild-Erfassungseinrichtungen (9, 13) erfassbar ist, so dass dieser Teilbereich einen Überlappungsbereich (21) der erfassten Fahrstreckenbereiche (15, 17) ausbildet, und dass mittels der Objektermittlungseinrichtung (27) die Positionen von in dem Überlappungsbereich (21) befindlichen Objekten relativ zu dem Fahrzeug (3) ermittelbar sind.

4. Vorrichtung nach einem der vorhergehenden Ansprüche, **dadurch gekennzeichnet, dass** die Objektermittlungseinrichtung (27) eine Speichereinrichtung (37) aufweist, mittels der die Aufnahmen der ersten Bild-Erfassungseinrichtung (9) zu dem ersten Zeitpunkt (t₁), die Aufnahmen der zweiten Bild-Erfassungseinrichtung (13) zu dem zweiten Zeitpunkt (t₂) und die mittels der Positionsermittlungseinrichtung (35) zu dem ersten und zweiten Zeitpunkt (t₁, t₂) ermittelten Positionen (31, 33) zumindest für einen definierten Zeitraum speicherbar sind.

5. Vorrichtung nach einem der vorhergehenden Ansprüche, **dadurch gekennzeichnet, dass** die Positionsermittlungseinrichtung (35) eine Fahrspurerkennungseinrichtung (39) aufweist, mittels der die Fahrspur des Fahrzeugs (3) und die Position des Fahrzeugs (3) innerhalb der Fahrspur erkennbar und/oder erfassbar ist, wobei bevorzugt vorgesehen ist, dass der erste und/oder der zweite Zeitpunkt (t₁, t₂) in Abhängigkeit von der ermittelten Fahrspur und der Position des Fahrzeugs (3) innerhalb der Fahrspur mittels der Objektermittlungseinrichtung (27) ermittelbar sind.

6. Vorrichtung nach einem der vorhergehenden Ansprüche, **dadurch gekennzeichnet, dass** eine Streckenverlauf-Erkennungseinrichtung (41) vorgesehen ist, mittels der der Streckenverlauf der Fahrstrecke des Fahrzeugs (3) erkennbar und/oder erfassbar ist, und dass die Streckenverlauf-Erkennungseinrichtung (41) datenübertragend mit der Objektermittlungseinrichtung (27) verbunden ist, wobei bevorzugt vorgesehen ist, dass der erste und/oder der zweite Zeitpunkt (t₁, t₂) in Abhängigkeit von dem ermittelten Streckenverlauf mittels der Objektermittlungseinrichtung (27) ermittelbar sind.

7. Vorrichtung nach einem der vorhergehenden Ansprüche, **dadurch gekennzeichnet, dass** zusätzlich zu der ersten Bild-Erfassungseinrichtung (9) wenigstens eine weitere Bild-Erfassungseinrichtung an der ersten Außenseite (7) des Fahrzeugs (3) angeordnet ist, mittels der ein, in Fahrzeug-Querrichtung (y) gesehen, seitlich neben dem Fahrzeug (3) und, in Fahrzeug-Längsrichtung (x) gesehen, hinter dem Fahrer des Fahrzeugs (3) liegender Fahrstreckenbereich bildlich und/oder filmisch erfassbar ist,
dass die an der ersten Außenseite (7) angeordneten Bild-Erfassungseinrichtungen (9) datenübertragend mit der Objektermittlungseinrichtung (27) verbunden sind, und dass mittels der Objektermittlungseinrichtung (27) aus den Aufnahmen der an der ersten Au-ßenseite (7) angeordneten Bild-Erfassungseinrichtungen (9) die Positionen von in den mittels der an der ersten Außenseite (7) angeordneten Bild-Erfassungseinrichtungen (9) erfassten Fahrstreckenbereichen befindlichen Objekten relativ zu dem Fahrzeug (3) ermittelbar sind, wobei die an der ersten Außenseite (7) des Fahrzeugs (3) angeordneten Bild-Erfassungseinrichtungen (9) und die Objektermittlungseinrichtung (27) ein Stereokamerasystem ausbilden.

8. Vorrichtung nach einem der vorhergehenden Ansprüche, **dadurch gekennzeichnet, dass** zusätzlich zu der zweiten Bild-Erfassungseinrichtung (13) wenigstens eine weitere Bild-Erfassungseinrichtung an der zweiten Außenseite (11) des Fahrzeugs (3) angeordnet ist, mittels der ein, in Fahrzeug-Querrichtung (y) gesehen, seitlich neben dem Fahrzeug (3) und, in Fahrzeug-Längsrichtung (x) gesehen, hinter dem Fahrer des Fahrzeugs (3) liegender Fahrstreckenbereich bildlich und/oder filmisch erfassbar ist,
dass die an der zweiten Außenseite (11) angeordneten Bild-Erfassungseinrichtungen (13) datenübertragend mit der Objektermittlungseinrichtung (27) verbunden sind, und dass mittels der Objektermittlungseinrichtung (27) aus den Aufnahmen der an der zweiten Außenseite (11) angeordneten Bild-Erfassungseinrichtungen (13) die Positionen von in den mittels der an der zweiten Außenseite (11) angeordneten Bild-Erfassungseinrichtungen (13) erfassten Fahrstreckenbereichen befindlichen Objekten relativ zu dem Fahrzeug (3) ermittelbar sind, wobei die an der zweiten Außenseite (11) des Fahrzeugs (3) angeordneten Bild-Erfassungseinrichtungen (13) und die Objektermittlungseinrichtung (27) ein Stereokamerasystem ausbilden.

9. Verfahren zur Unterstützung eines Fahrers eines Fahrzeugs mit einer, in Fahrzeug-Querrichtung (y) gesehen, seitlich außen an einer ersten Außenseite (7) des Fahrzeugs (3) angeordneten ersten Bild-Erfassungseinrichtung (9) und einer gegenüberliegend zu der ersten Außenseite (7) an einer zweiten Außenseite (11) des Fahrzeugs (3) angeordneten zweiten Bild-Erfassungseinrichtung (13), wobei mittels jeder Bild-Erfassungseinrichtung (9, 13) jeweils ein, in Fahrzeug-Querrichtung (y) gesehen, seitlich neben dem Fahrzeug (3) und, in Fahrzeug-Längsrichtung (x) gesehen, hinter einem Fahrer des Fahrzeugs (3) liegender Fahrstreckenbereich (15, 17) bildlich und/oder filmisch erfasst wird, und mit einer Anzeigeeinrichtung (19), mittels der dem Fahrer zumindest ein Teil der erfassten Fahrstreckenbereiche (15, 17) angezeigt wird, wobei die die Bild-Erfassungseinrichtungen (9, 13) und die Anzeigeeinrichtung (19) einen Ersatz für seitliche Fahrzeug-Außenspiegel ausbilden,
**dadurch gekennzeichnet,**
**dass** eine datenübertragend mit den Bild-Erfassungseinrichtungen (9, 13) verbundene Objektermittlungseinrichtung (27) vorgesehen ist, mittels der aus den Aufnahmen der Bild-Erfassungseinrichtungen (9, 13) die Positionen von in den mittels der Bild-Erfassungseinrichtungen (9, 13) erfassten Fahrstreckenbereichen (15, 17) befindlichen Objekten (29) relativ zu dem Fahrzeug (3) ermittelt werden, wobei die Bild-Erfassungseinrichtungen (9, 13) und die Objektermittlungseinrichtung (27) ein Stereokamerasystem (25) ausbilden,
**dass** wenigstens ein Teilbereich (23) der erfassbaren Fahrstreckenbereiche (15, 17) nicht gleichzeitig mittels der Bild-Erfassungseinrichtungen (9, 13) erfassbar ist, so dass dieser Teilbereich (23) keinen Überlappungsbereich der erfassten Fahrstreckenbereiche (15, 17) ausbildet,
**dass** eine Positionsermittlungseinrichtung (35) vorgesehen ist, mittels der zu einem ersten Zeitpunkt (t₁) eine erste Position (33) des Fahrzeugs (3) auf der Fahrstrecke ermittelt wird, und mittels der zu einem zweiten Zeitpunkt (t₂) eine gegenüber der ersten Position (33) unterschiedliche, zweite Position (31) des Fahrzeugs (3) auf der Fahrstrecke ermittelt wird, wobei in der ersten Position (33) ein nicht gleichzeitig erfassbarer Teilbereich (23) der Fahrstreckenbereiche (15, 17) mittels der ersten Bild-Erfassungseinrichtung (9) erfasst wird, während in der zweiten Position (31) dieser Teilbereich (23) mittels der zweiten Bild-Erfassungseinrichtung (13) erfasst wird,
und **dass** mittels der Objektermittlungseinrichtung (27) aus den mittels der Positionsermittlungseinrichtung (35) ermittelten unterschiedlichen Positionen (31, 33) und aus dem in den unterschiedlichen Position (31, 33) mittels der Bild-Erfassungseinrichtungen (9, 13) erfassten Teilbereich (23) die Positionen von in dem nicht gleichzeitig erfassbaren Teilbereich (23) befindlichen Objekten (29) relativ zu dem Fahrzeug (1) ermittelt werden.

10. Verfahren nach Anspruch 9, **dadurch gekennzeichnet, dass** sich das Fahrzeug (3) während des ersten und/oder des zweiten Zeitpunkts (t₁, t₂) in Geradeausfahrt befindet.

11. Fahrzeug mit einer Vorrichtung nach einem der Ansprüche 1 bis 8 und/oder zur Durchführung des Verfahrens nach Anspruch 9 oder 10.

12. Fahrzeug nach Anspruch 11, **dadurch gekennzeichnet, dass** das Fahrzeug (3) als Zugfahrzeug eines Fahrzeug-Gespanns (1) ausgebildet ist, das mit einem Anhänger/Auflieger (5) des Fahrzeug-Gespanns (1) gekoppelt ist.

## Claims

1. Apparatus for assisting a driver of a vehicle, having a first image capturing device (9), which is arranged, viewed in the vehicle transverse direction (y), laterally outside on a first exterior side (7) of the vehicle (3), and a second image capturing device (13), which is arranged, opposite the first exterior side (7), on a second exterior side (11) of the vehicle (3), wherein in each case a driving path region (15, 17), located, viewed in the vehicle transverse direction (y), laterally next to the vehicle (3) and, viewed in the vehicle longitudinal direction (x), behind a driver of the vehicle (3), is capturable in image and/or film by means of each image capturing device (9, 13), and having a display device (19), by means of which a portion of the captured driving path regions (15, 17) is displayable to the driver, wherein the image capturing devices (9, 13) and the display device (19) form a substitution for lateral vehicle external mirrors,
**characterized**
**in that** an object ascertainment device (27) is provided, which is connected via a data link to the image capturing devices (9, 13) and by means of which the positions of objects (29), which are located in driving path regions (15, 17) which have been captured by means of the image capturing devices (9, 13), relative to the vehicle (3) are ascertainable from the recordings of the image capturing devices (9, 13), wherein the image capturing devices (9, 13) and the object ascertainment device (27) form a stereo camera system (25),
**in that** at least one partial region (23) of the capturable driving path regions (15, 17) is not simultaneously capturable by means of the image capturing devices (9, 13), with the result that said partial region (23) does not form an overlap region of the captured driving path regions (15, 17),
**in that** a position ascertainment device (35) is provided, by means of which a first position (33) of the vehicle (3) on the driving path is ascertainable at a first time point (t₁), and by means of which a second position (31) of the vehicle (3), which differs from the first position (33), on the driving path is ascertainable at a second time point (t₂), wherein a partial region (23) of the driving path regions (15, 17) which is not simultaneously capturable is capturable in the first position (33) by means of the first image capturing device (9), while said partial region (23) is capturable in the second position (31) by means of the second image capturing device (13),
and **in that** the positions of objects (29), located in the partial region (23) which is not simultaneously capturable, relative to the vehicle (1) are ascertainable by means of the object ascertainment device (27) from the different positions (31, 33) which have been ascertained by means of the position ascertainment device (35), and from the partial region (23) which has been captured in the different positions (31, 33) by means of the image capturing devices (9, 13).

2. Apparatus according to Claim 1, **characterized in that** a display device (19) is provided, by means of which information relating to the positions which have been ascertained by means of the object ascertainment device (29) are displayable to a driver of the vehicle (3), and/or **in that** the object ascertainment device (27) is connected via a data link to at least one driver assistance system of the vehicle that uses information relating to the positions of the objects relative to the vehicle.

3. Apparatus according to Claim 1 or 2, **characterized in that** at least one partial region of the capturable driving path regions (15, 17) is capturable simultaneously by means of the image capturing devices (9, 13), such that said partial region forms an overlap region (21) of the captured driving path regions (15, 17), and **in that** the positions of objects located in the overlap region (21) relative to the vehicle (3) are ascertainable by means of the object ascertainment device (27).

4. Apparatus according to one of the preceding claims, **characterized in that** the object ascertainment device (27) has a storage device (37), by means of which the recordings of the first image capturing device (9) at the first time point (t₁), the recordings of the second image capturing device (13) at the second time point (t₂) and the positions (31, 33) ascertained by means of the position ascertainment device (35) at the first and second time points (t₁, t₂) are storable at least for a defined time period.

5. Apparatus according to one of the preceding claims, **characterized in that** the position ascertainment device (35) has a lane recognition device (39), by means of which the lane of the vehicle (3) and the position of the vehicle (3) within the lane is recognizable and/or capturable, wherein provision is preferably made for the first and/or the second time point (t₁, t₂) to be ascertainable by means of the object ascertainment device (27) in dependence on the ascertained lane and the position of the vehicle (3) within the lane.

6. Apparatus according to one of the preceding claims, **characterized in that** a route progression recognition device (41) is provided, by means of which the route progression of the driving path of the vehicle (3) is recognizable and/or capturable, and **in that** the route progression recognition device (41) is connected via a data link to the object ascertainment device (27), wherein provision is preferably made for the first and/or the second time point (t₁, t₂) to be ascertainable by means of the object ascertainment device (27) in dependence on the ascertained route progression.

7. Apparatus according to one of the preceding claims, **characterized in that**, in addition to the first image capturing device (9), at least one further image capturing device is arranged on the first exterior side (7) of the vehicle (3), by means of which a driving path region, located, viewed in the vehicle transverse direction (y), laterally next to the vehicle (3) and, viewed in the vehicle longitudinal direction (x), behind the driver of the vehicle (3), is ascertainable in image and/or film,
**in that** the image capturing devices (9) arranged on the first exterior side (7) are connected via a data link to the object ascertainment device (27), and **in that** the positions of objects, which are located in the driving path regions which have been captured by means of the image capturing devices (9) that are arranged on the first exterior side (7), relative to the vehicle (3) are ascertainable by means of the object ascertainment device (27) from the recordings of the image capturing devices (9) that are arranged on the first exterior side (7), wherein the image capturing devices (9) that are arranged on the first exterior side (7) of the vehicle (3) and the object ascertainment device (27) form a stereo camera system.

8. Apparatus according to one of the preceding claims, **characterized in that**, in addition to the second image capturing device (13), at least one further image capturing device is arranged on the second exterior side (11) of the vehicle (3), by means of which a driving path region, which is located, viewed in the vehicle transverse direction (y), laterally next to the vehicle (3) and, viewed in the vehicle longitudinal direction (x), behind the driver of the vehicle (3) is capturable in image and/or film,
**in that** the image capturing devices (13) that are arranged on the second exterior side (11) are connected via a data link to the object ascertainment device (27), and **in that** the positions of objects, which are located in the driving path regions which have been captured by means of the image capturing devices (13) that are arranged on the second exterior side (11), relative to the vehicle (3) are ascertainable by means of the object ascertainment device (27) from the recordings of the image capturing devices (13) that are arranged at the second exterior side (11), wherein the image capturing devices (13) that are arranged on the second exterior side (11) of the vehicle (3) and the object ascertainment device (27) form a stereo camera system.

9. Method for assisting a driver of a vehicle with a first image capturing device (9), which is arranged, viewed in the vehicle transverse direction (y), laterally outside on a first exterior side (7) of the vehicle (3), and a second image capturing device (13), which is arranged, opposite the first exterior side (7), on a second exterior side (11) of the vehicle (3), wherein in each case a driving path region (15, 17), located, viewed in the vehicle transverse direction (y), laterally next to the vehicle (3) and, viewed in the vehicle longitudinal direction (x), behind a driver of the vehicle (3), is captured in image and/or film by means of each image capturing device (9, 13), and with a display device (19), by means of which a portion of the captured driving path regions (15, 17) is displayed to the driver, wherein the image capturing devices (9, 13) and the display device (19) form a substitution for lateral vehicle external mirrors,
**characterized**
**in that** an object ascertainment device (27) is provided, which is connected via a data link to the image capturing devices (9, 13) and by means of which the positions of objects (29), which are located in driving path regions (15, 17) which have been captured by means of the image capturing devices (9, 13), relative to the vehicle (3) are ascertained from the recordings of the image capturing devices (9, 13), wherein the image capturing devices (9, 13) and the object ascertainment device (27) form a stereo camera system (25),
**in that** at least one partial region (23) of the capturable driving path regions (15, 17) is not simultaneously capturable by means of the image capturing devices (9, 13), with the result that said partial region (23) does not form an overlap region of the captured driving path regions (15, 17),
**in that** a position ascertainment device (35) is provided, by means of which a first position (33) of the vehicle (3) on the driving path is ascertained at a first time point (t₁), and by means of which a second position (31) of the vehicle (3), which differs from the first position (33), on the driving path is ascertained at a second time point (t₂), wherein a partial region (23) of the driving path regions (15, 17) which is not simultaneously capturable is captured in the first position (33) by means of the first image capturing device (9), while said partial region (23) is captured in the second position (31) by means of the second image capturing device (13),
and **in that** the positions of objects (29), located in the partial region (23) which is not simultaneously capturable, relative to the vehicle (1) are ascertained by means of the object ascertainment device (27) from the different positions (31, 33) which have been ascertained by means of the position ascertainment device (35), and from the partial region (23) which has been captured in the different positions (31, 33) by means of the image capturing devices (9, 13).

10. Method according to Claim 9, **characterized in that** the vehicle (3) is driving in a straight line during the first and/or the second time point (t₁, t₂).

11. Vehicle having an apparatus according to one of Claims 1 to 8 and/or for performing the method according to Claim 9 or 10.

12. Vehicle according to Claim 11, **characterized in that** the vehicle (3) is configured as a towing vehicle of a vehicle-trailer combination (1), which is coupled to a trailer (5) of the vehicle-trailer combination (1).

## Revendications

1. Arrangement d'assistance d'un conducteur d'un véhicule, comprenant un premier dispositif de capture d'images (9) disposé, vu dans le sens transversal (y) du véhicule, latéralement à l'extérieur au niveau d'un premier côté extérieur (7) du véhicule (3) et un deuxième dispositif de capture d'images (13) disposé à l'opposé du premier côté extérieur (7) au niveau d'un deuxième côté extérieur (11) du véhicule (3), une zone de parcours (15, 17) qui, vue dans le sens transversal (y) du véhicule, se trouve latéralement à côté du véhicule (3) et, vue dans le sens longitudinal (x) du véhicule, derrière un conducteur du véhicule (3) pouvant respectivement être capturée sous forme d'image et/ou de film au moyen de chaque dispositif de capture d'images (9, 13), et comprenant un dispositif d'affichage (19) au moyen duquel au moins une partie des zones de parcours (15, 17) capturées peut être affichée au conducteur, les dispositifs de capture d'images (9, 13) et le dispositif d'affichage (19) représentant une substitution pour les rétroviseurs extérieurs latéraux du véhicule,
**caractérisé en ce**
**qu'**un dispositif de détermination d'objet (27) relié en communication de données avec les dispositifs de capture d'images (9, 13) est présent, au moyen duquel les positions par rapport au véhicule (3) des objets (29) qui se trouvent dans les zones de parcours (15, 17) capturées au moyen des dispositifs de capture d'images (9, 13) peuvent être déterminées à partir des enregistrements des dispositifs de capture d'images (9, 13), les dispositifs de capture d'images (9, 13) et le dispositif de détermination d'objet (27) formant un système de caméra stéréoscopique (25),
**qu'**au moins une zone partielle (23) des zones de parcours (15, 17) pouvant être capturées ne peut pas être capturée simultanément au moyen des dispositifs de capture d'images (9, 13), de sorte que cette zone partielle (23) ne forme pas de zone de chevauchement des zones de parcours (15, 17) capturées,
**qu'**un dispositif de détermination de position (35) est présent, au moyen duquel une première position (33) du véhicule (3) sur le parcours peut être déterminée à un premier instant (t₁), et au moyen duquel une deuxième position (31) du véhicule (3) sur le parcours, différente par rapport à la première position (33), peut être déterminée à un deuxième instant (t₂), une zone partielle (23) des zones de parcours (15, 17) qui ne peut pas être capturée simultanément pouvant être capturée dans la première position (33) au moyen du premier dispositif de capture d'images (9), tandis que dans la deuxième position (31), cette zone partielle (23) peut être capturée au moyen du deuxième dispositif de capture d'images (13),
et **qu'**au moyen du dispositif de détermination d'objet (27), les positions par rapport au véhicule (1) des objets (29) qui se trouvent dans la zone partielle (23) qui ne peut pas être capturée simultanément peuvent être déterminées à partir des différentes positions (31, 33) déterminées au moyen du dispositif de détermination de position (35) et à partir de la zone partielle (23) capturée dans les différentes positions (31, 33) au moyen des dispositifs de capture d'images (9, 13).

2. Arrangement selon la revendication 1, **caractérisé en ce qu'**un dispositif d'affichage (19) est présent, au moyen duquel des informations à propos des positions déterminées au moyen du dispositif de détermination d'objet (29) peuvent être affichées à un conducteur du véhicule (3) et/ou **en ce que** le dispositif de détermination d'objet (27) est relié en communication de données à au moins un système d'assistance au conducteur du véhicule qui utilise des informations à propos des positions des objets par rapport au véhicule.

3. Arrangement selon la revendication 1 ou 2, **caractérisé en ce qu'**au moins une zone partielle des zones de parcours (15, 17) pouvant être capturées peut être capturée simultanément au moyen des dispositifs de capture d'images (9, 13) de telle sorte que cette zone partielle représente une zone de chevauchement (21) des zones de parcours (15, 17) capturées, et **en ce que** les positions par rapport au véhicule (3) des objets qui se trouvent dans la zone de chevauchement (21) peuvent être déterminées au moyen du dispositif de détermination d'objet (27).

4. Arrangement selon l'une des revendications précédentes, **caractérisé en ce que** le dispositif de détermination d'objet (27) possède un dispositif de mémorisation (37) au moyen duquel peuvent être mémorisés au moins pendant une période définie les enregistrements du premier dispositif de capture d'images (9) au premier instant (t₁), les enregistrements du deuxième dispositif de capture d'images (13) au deuxième instant (t₂) et les positions (31, 33) déterminées au moyen du dispositif de détermination de position (35) au premier et au deuxième instant (t₁, t₂).

5. Arrangement selon l'une des revendications précédentes, **caractérisé en ce que** le dispositif de détermination de position (35) possède un dispositif de reconnaissance de voie de circulation (39) au moyen duquel peuvent être reconnues et/ou capturées la voie de circulation du véhicule (3) et la position du véhicule (3) à l'intérieur de la voie de circulation, en prévoyant de préférence que le premier et/ou le deuxième instant (t₁, t₂) peuvent être déterminés au moyen du dispositif de détermination d'objet (27) en fonction de la voie de circulation déterminée et de la position du véhicule (3) à l'intérieur de la voie de circulation.

6. Arrangement selon l'une des revendications précédentes, **caractérisé en ce qu'**un dispositif de reconnaissance du tracé du parcours (41) est présent, au moyen duquel le tracé du parcours du véhicule (3) peut être reconnu et/ou capturé, et **en ce que** le dispositif de reconnaissance du tracé du parcours (41) est relié en communication de données au dispositif de détermination d'objet (27), en prévoyant de préférence que le premier et/ou le deuxième instant (t₁, t₂) peuvent être déterminés au moyen du dispositif de détermination d'objet (27) en fonction du tracé du parcours déterminé.

7. Arrangement selon l'une des revendications précédentes, **caractérisé en ce qu'**en plus du premier dispositif de capture d'images (9), au moins un dispositif de capture d'images supplémentaire est disposé au niveau du premier côté extérieur (7) du véhicule (3), au moyen duquel une zone de parcours qui, vue dans le sens transversal (y) du véhicule, se trouve latéralement à côté du véhicule (3) et, vue dans le sens longitudinal (x) du véhicule, derrière le conducteur du véhicule (3), peut être capturée sous forme d'image et/ou de film, **en ce que** les dispositifs de capture d'images (9) disposés au niveau du premier côté extérieur (7) sont reliés en communication de données au dispositif de détermination d'objet (27), et **en ce que** les positions par rapport au véhicule (3) des objets qui se trouvent dans les zones de parcours capturées au moyen des dispositifs de capture d'images (9) disposés au niveau du premier côté extérieur (7) peuvent être déterminées au moyen du dispositif de détermination d'objet (27) à partir des enregistrements des dispositifs de capture d'images (9) disposés au niveau du premier côté extérieur (7), les dispositifs de capture d'images (9) disposés au niveau du premier côté extérieur (7) du véhicule (3) et le dispositif de détermination d'objet (27) formant un système de caméra stéréoscopique.

8. Arrangement selon l'une des revendications précédentes, **caractérisé en ce qu'**en plus du deuxième dispositif de capture d'images (13), au moins un dispositif de capture d'images supplémentaire est disposé au niveau du deuxième côté extérieur (11) du véhicule (3), au moyen duquel une zone de parcours qui, vue dans le sens transversal (y) du véhicule, se trouve latéralement à côté du véhicule (3) et, vue dans le sens longitudinal (x) du véhicule, derrière le conducteur du véhicule (3), peut être capturée sous forme d'image et/ou de film,
**en ce que** les dispositifs de capture d'images (13) disposés au niveau du deuxième côté extérieur (11) sont reliés en communication de données au dispositif de détermination d'objet (27), et **en ce que** les positions par rapport au véhicule (3) des objets qui se trouvent dans les zones de parcours capturées au moyen des dispositifs de capture d'images (13) disposés au niveau du deuxième côté extérieur (11) peuvent être déterminées au moyen du dispositif de détermination d'objet (27) à partir des enregistrements des dispositifs de capture d'images (13) disposés au niveau du deuxième côté extérieur (11), les dispositifs de capture d'images (13) disposés au niveau du deuxième côté extérieur (11) du véhicule (3) et le dispositif de détermination d'objet (27) formant un système de caméra stéréoscopique.

9. Procédé d'assistance d'un conducteur d'un véhicule comprenant un premier dispositif de capture d'images (9) disposé, vu dans le sens transversal (y) du véhicule, latéralement à l'extérieur au niveau d'un premier côté extérieur (7) du véhicule (3) et un deuxième dispositif de capture d'images (13) disposé à l'opposé du premier côté extérieur (7) au niveau d'un deuxième côté extérieur (11) du véhicule (3), une zone de parcours (15, 17) qui, vue dans le sens transversal (y) du véhicule, se trouve latéralement à côté du véhicule (3) et, vue dans le sens longitudinal (x) du véhicule, derrière un conducteur du véhicule (3) pouvant respectivement être capturée sous forme d'image et/ou de film au moyen de chaque dispositif de capture d'images (9, 13), et comprenant un dispositif d'affichage (19) au moyen duquel au moins une partie des zones de parcours (15, 17) capturées peut être affichée au conducteur, les dispositifs de capture d'images (9, 13) et le dispositif d'affichage (19) représentant une substitution pour les rétroviseurs extérieurs latéraux du véhicule,
**caractérisé en ce**
**qu'**un dispositif de détermination d'objet (27) relié en communication de données avec les dispositifs de capture d'images (9, 13) est présent, au moyen duquel les positions par rapport au véhicule (3) des objets (29) qui se trouvent dans les zones de parcours (15, 17) capturées au moyen des dispositifs de capture d'images (9, 13) sont déterminées à partir des enregistrements des dispositifs de capture d'images (9, 13), les dispositifs de capture d'images (9, 13) et le dispositif de détermination d'objet (27) formant un système de caméra stéréoscopique (25),
**qu'**au moins une zone partielle (23) des zones de parcours (15, 17) pouvant être capturées ne peut pas être capturée simultanément au moyen des dispositifs de capture d'images (9, 13), de sorte que cette zone partielle (23) ne forme pas de zone de chevauchement des zones de parcours (15, 17) capturées,
**qu'**un dispositif de détermination de position (35) est présent, au moyen duquel une première position (33) du véhicule (3) sur le parcours est déterminée à un premier instant (t₁), et au moyen duquel une deuxième position (31) du véhicule (3) sur le parcours, différente par rapport à la première position (33), est déterminée à un deuxième instant (t₂), une zone partielle (23) des zones de parcours (15, 17) qui ne peut pas être capturée simultanément étant capturée dans la première position (33) au moyen du premier dispositif de capture d'images (9), tandis que dans la deuxième position (31), cette zone partielle (23) est capturée au moyen du deuxième dispositif de capture d'images (13),
et **qu'**au moyen du dispositif de détermination d'objet (27), les positions par rapport au véhicule (1) des objets (29) qui se trouvent dans la zone partielle (23) qui ne peut pas être capturée simultanément sont déterminées à partir des différentes positions (31, 33) déterminées au moyen du dispositif de détermination de position (35) et à partir de la zone partielle (23) capturée dans les différentes positions (31, 33) au moyen des dispositifs de capture d'images (9, 13).

10. Procédé selon la revendication 9, **caractérisé en ce que** le véhicule (3) se trouve en déplacement en ligne droite pendant le premier et/ou le deuxième instant (t₁, t₂).

11. Véhicule équipé d'un arrangement selon l'une des revendications 1 à 8 et/ou destiné à mettre en oeuvre le procédé selon la revendication 9 ou 10.

12. Véhicule selon la revendication 11, **caractérisé en ce que** le véhicule (3) est réalisé sous la forme d'un véhicule tracteur d'un ensemble routier (1), lequel est accouplé à une remorque/semi-remorque (5) de l'ensemble routier (1).
